(19) Europäisches Patentamt
European Patent Office
Office européen des brevets

(11) **EP 4 289 679 A1**

(12) **EUROPEAN PATENT APPLICATION**
published in accordance with Art. 153(4) EPC

(43) Date of publication:
**13.12.2023 Bulletin 2023/50**

(21) Application number: **22749832.6**

(22) Date of filing: **04.02.2022**

(51) International Patent Classification (IPC):
**B60R 21/235** (2006.01)  **B32B 27/00** (2006.01)
**B32B 27/12** (2006.01)  **B32B 27/34** (2006.01)
**B60R 21/232** (2011.01)  **D03D 1/02** (2006.01)
**D06M 15/59** (2006.01)

(52) Cooperative Patent Classification (CPC):
**B32B 27/00; B32B 27/12; B32B 27/34;
B60R 21/232; B60R 21/235; D03D 1/02;
D06M 15/59**

(86) International application number:
**PCT/JP2022/004551**

(87) International publication number:
**WO 2022/168961 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.02.2021  JP 2021017390**

(71) Applicant: **Asahi Kasei Kabushiki Kaisha
Tokyo 1000006 (JP)**

(72) Inventors:
• **WATANABE Hideki
  Tokyo 100-0006 (JP)**
• **ITOU Miyuki
  Tokyo 100-0006 (JP)**
• **KABEYA Takumi
  Tokyo 100-0006 (JP)**

(74) Representative: **D Young & Co LLP
120 Holborn
London EC1N 2DY (GB)**

(54) **MULTILAYER COMPOSITE FOR AIRBAG**

(57)    To provide a multilayer composite for an airbag that has both scrub resistance and flexibility, the multilayer composite for an airbag includes a base fabric, and a multilayer film including an outer layer and an adhesive layer adhered to a surface of the base fabric in which a ratio Sdr1/Sdr2 is from 0.986 to 1.1, where Sdr1 is an interface deployment area ratio of a multilayer film side surface of the multilayer composite for an airbag and Sdr2 is an interface deployment area ratio of a base fabric side surface of the multilayer composite for an airbag.

*FIG. 2*

EP 4 289 679 A1

## Description

TECHNICAL FIELD

The present disclosure relates to a multilayer composite for an airbag.

BACKGROUND

Typical applications for airbags include automotive applications. In such an application, an inflator is triggered immediately in the event of a collision, inflating a folded airbag, and absorbing kinetic energy of an occupant to prevent serious injury. In recent years, more and more vehicles have been equipped with airbags due to vehicle safety regulations and increasing safety awareness.

There are various types of airbags for vehicles, including frontal airbags anticipating frontal collisions, side airbags and side curtain airbags anticipating side collisions and rollovers, and external airbags to protect pedestrians. Performance requirements for such airbags include flexibility for compact storage in small spaces, strength properties to withstand pressure during inflation, scrub resistance to withstand friction during storage and inflation, and airtightness to maintain inflation for a certain period of time. In particular, a side curtain airbag must maintain inflation for a longer period of time than a front airbag to protect an occupant from a side collision and a resulting rollover of a vehicle. Thus, higher airtightness is required.

Materials for forming an airbag include a synthetic fiber fabric (hereinafter, also referred to as "base fabric") used as a support layer, and a barrier material covering a surface of the support layer to impart airtightness. Silicone rubber (applied by coating) or a multilayer film (applied by thermal lamination) are used for the barrier material, depending on required properties.

In a multilayer film applied by thermal lamination, a layer that adheres to the base fabric is an adhesive layer, and a layer on a side opposite to the adhesive layer is an outer layer, each layer being formed using a resin that has a different melting point and glass transition temperature.

As such a multilayer film, Patent Literature (PTL) 1 describes technology related to a multilayer film including a resin layer that has a high melting point and a resin layer that has a low melting point. Accordingly, a modified polyolefin that has a melting point from 85 °C to 105 °C is used for the resin layer that has a low melting point and is adhered to the base fabric. Further, PTL 2 describes technology related to a multilayer film including resin layers having different glass transition temperatures. Accordingly, copolyamide, copolyester, and polyamide elastomer having a glass transition temperature of -10 °C or lower are used in a first resin layer that is adhered to the base fabric. Further, PTL 3 describes technology related to a multilayer film in which an adhesive layer includes a resin having a glass transition temperature and melting point in a specific range, and an outer layer includes a resin having a melting point 20 °C higher than the resin in the adhesive layer.

CITATION LIST

Patent Literature

PTL 1: JP4965757B
PTL 2: EP1518761A
PTL 3: WO2020/032032A

SUMMARY

(Technical Problem)

However, according to PTL 1, modified polyolefin is used in the adhesive layer that adheres to the base fabric, and therefore an affinity with the base fabric made of polyamide or polyester fibers is poor, and adhesive strength is insufficient. Insufficient adhesive strength could cause the multilayer film to peel off from the base fabric when the airbag inflates, hindering the airbag from fully functioning.

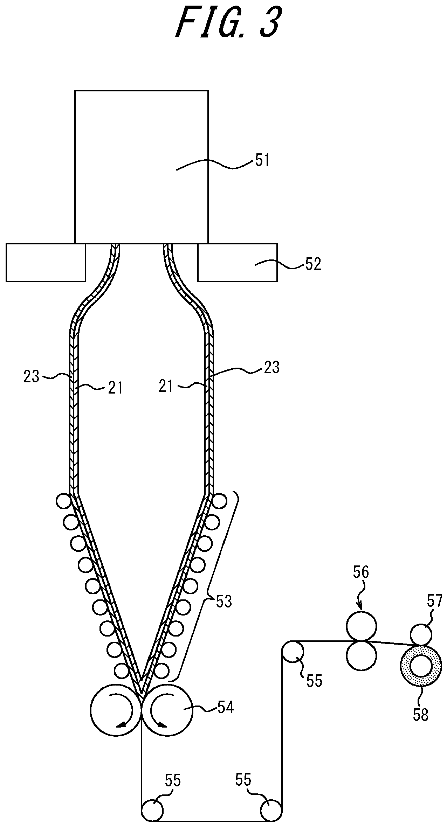

Further, the barrier material of PTL 2 has excellent flexibility and adhesiveness, due to use of any of copolyamide, polyamide elastomer, and polyester elastomer having a glass transition temperature of -10 °C or lower in the adhesive layer, but has a disadvantage of low crystallinity due to poor stereoregularity in molecular structure, being susceptible to blocking (fusion). Therefore, for example, when an inflation method (FIG. 3) with excellent productivity is adopted as a production method for a barrier material, blocking occurs in a pinch roller section after blow-up processing, making it difficult to peel apart a two-layer film in a subsequent peeling process, resulting in film breakage and wrinkles and winding misalignment due to variations in peeling position, making stable production difficult. Further, a product wound with a blocking-prone film has a storage problem, as blocking occurs due to winding tension, temperature and humidity conditions, and the like during storage, making it difficult to pull out the film.

Although the multilayer film of PTL 3 solves a problem of blocking properties, an expensive equipment requirement is a problem due to high pressure during lamination being required to obtain sufficient adhesive strength, or in a case of lamination at low pressure, low-speed lamination that requires prolonged heating results in poor productivity. Further, there are problems with both scrub resistance and flexibility (storability).

It would be helpful to provide a multilayer composite for an airbag that is both scrub resistant and flexible.

(Solution to Problem)

The present disclosure is as follows.

[1] A multilayer composite for an airbag, comprising a base fabric and a multilayer film including an outer layer and an adhesive layer adhered to a surface of the base fabric, wherein
a ratio Sdr1/Sdr2 is from 0.986 to 1.1, where Sdr1 is an interface deployment area ratio of a multilayer film side surface of the multilayer composite for an airbag and Sdr2 is an interface deployment area ratio of a base fabric side surface of the multilayer composite for an airbag.
[2] The multilayer composite for an airbag of aspect [1], wherein the multilayer film has a thickness of from 10 $\mu$m to 30 $\mu$m.
[3] The multilayer composite for an airbag of aspect [1] or [2], wherein the multilayer composite has an air gap between the multilayer film and the base fabric, the air gap having a length of 6 $\mu$m or less.
[4] A method of producing a multilayer composite for an airbag, the method comprising:

a thermal lamination step of heat laminating a base fabric and a multilayer film including an outer layer and an adhesive layer with the adhesive layer overlaid on a surface of the base fabric; and
a subsequent heating step of heating again after the thermal lamination step.

(Advantageous Effect)

The present disclosure provides a multilayer composite for an airbag that combines both scrub resistance and flexibility.

BRIEF DESCRIPTION OF THE DRAWINGS

In the accompanying drawings:

FIG. 1A is a photograph of a cross-section illustrating a multilayer composite for an airbag according to the embodiment disclosed herein;
FIG. 1B is a schematic cross-sectional diagram illustrating an example of the multilayer composite for an airbag according to the embodiment disclosed herein;
FIG. 2 is an enlarged schematic diagram illustrating a bonded part between a base fabric and a multilayer film as an example of the multilayer composite for an airbag according to the embodiment disclosed herein;
FIG. 3 is a schematic diagram illustrating an example of an inflation method;
FIG. 4 is a schematic diagram illustrating an example of a method of producing a multilayer composite for an airbag according to the embodiment disclosed herein;
FIG. 5 is a schematic diagram illustrating a loop stiffness test; and
FIG. 6 is a schematic diagram for explaining sections for use in measuring a composite gap length; A-A' section is taken to include both warp and weft yarns in the section, and B-B' section is taken to include only warp yarns in the section.

The A-A' section and the B-B' section are similarly defined as above for fibers woven in different patterns (such as twill woven fibers).

DETAILED DESCRIPTION

The following is a detailed description of an embodiment of the present disclosure, but the present disclosure is not limited to the embodiment and Examples described below, and may be modified without departing from the spirit and scope of the disclosure.

[Multilayer composite for airbag]

A multilayer composite for an airbag according to the present embodiment is a composite that consists only of a base fabric and a multilayer film that includes an outer layer and an adhesive layer adhered to a surface of the base fabric.

The multilayer composite for an airbag of the present embodiment has a ratio (Sdr1Sdr2) of 0.986 or more, where Sdr1 is an interface deployment area ratio of a multilayer film side surface of the multilayer composite for an airbag and Sdr2 is an interface deployment area ratio of a base fabric side surface of the multilayer composite for an airbag.

Hereinafter, the multilayer composite for an airbag of the present embodiment may be referred to simply as a "composite".

The multilayer film includes at least two layers, of which a layer that adheres to the base fabric (that is, a layer including a surface on a base fabric side) serves as the adhesive layer, and a layer including a composite surface exposed outside the multilayer composite for an airbag serves as the outer layer.

The following describes the multilayer film according to the present embodiment.

(Multilayer film)

The aforementioned multilayer film may have a two-layer structure of the adhesive layer and the outer layer in which the adhesive layer and the outer layer are stacked, may have a three-layer structure of the adhesive layer, an intermediate layer, and the outer layer, and may have a five-layer structure of the adhesive layer, a glue layer, an intermediate layer, a glue layer, and the outer layer. The multilayer film may further include another layer or layers other than those listed above. The adhesive layer and the outer layer are preferably surface layers on opposite surfaces of the multilayer film.

The multilayer film also preferably has excellent preservability due to suppressed blocking properties as well as excellent adhesiveness with respect to the base fabric. By using the multilayer film configured as described above, a highly reliable, stable quality multilayer composite for an airbag may be obtained.

-Adhesive layer-

It is known that crystallinity (degree of crystallinity and crystallization speed) is a dominant factor in determining blocking properties of crystalline resins. The inventors' previous studies have made it clear that blocking properties may also be suppressed by adjusting the glass transition temperature. Further, the previous studies have also made it clear that by using a resin having a glass transition temperature and a melting point falling within a specific range for the adhesive layer, a multilayer film for an airbag having a better balance between blocking resistance and adhesiveness may be obtained.

The adhesive layer preferably includes a resin having a glass transition temperature from -80 °C to 80 °C and a melting point from 100 °C to 160 °C (hereinafter also referred to as "resin A"). The adhesive layer may include another resin (hereinafter also referred to as "resin B") in addition to the resin A. The resin A and the resin B may each be one resin and may each be more than one resin.

The adhesive layer may consist only of the resin A, may further include the resin B and additives described below, may consist only of the resin A, the resin B and additives, and may consist only of the resin A and additives.

The glass transition temperature of the resin A is preferably from -80 °C to 80 °C, more preferably from 0 °C to 80 °C, even more preferably from 10 °C to 70 °C, and particularly preferably from 20 °C to 60 °C. The range of the glass transition temperature is determined in view of blocking resistance and melting point. When the glass transition temperature is 0 °C or more, the blocking resistance further suppresses blocking, and when the glass transition temperature is less than or equal to 80 °C, the melting point to be described later may be adjusted to an appropriate range.

The aforementioned glass transition temperature may be measured according to a method described in an Example below.

When the resin A includes more than one resin, the glass transition temperatures of the resins of the resin A may be the same or different from one another.

The melting point of the resin A is preferably from 100 °C to 160 °C, more preferably from 110 °C to 150 °C, and even more preferably from 120 °C to 140 °C. By setting the melting point to 100 °C or higher, adhesive strength with respect to the base fabric may be maintained even under high-temperature operating conditions, and a range of conditions (also called a process window) for temperature, pressure, time, and the like during a lamination process may be broadened, resulting in stable quality of the multilayer film. On the other hand, by setting the melting point to 160 °C or lower, moderate flexibility is obtainable.

The melting point may be measured by a method described in an Example below.

When the resin A includes more than one resin, the melting points of the resins of the resin A may be the same or different from one another. When the resin A includes more than one resin and has multiple melting peaks, a highest melting peak temperature of the resins of the resin A is preferably in a range of from 100 °C to 160 °C, more preferably from 110 °C to 150 °C, and even more preferably from 120 °C to 140 °C.

The resin A and the resin B may each be a single resin or a mixture of multiple resins blended together.

As the resin A, a polyamide-based resin is preferred for its flexibility, adhesiveness, and other properties that change little in response to changes in temperature and humidity in an operating environment. As the polyamide-based resin, in particular, copolyamide (a-1), dimer acid-based polyamide (a-2), and thermoplastic polyamide elastomer (a-3) are preferred. In view of flexibility, adhesiveness, and cost, copolyamide (a-1) is more preferred.

The copolyamide (a-1) may be a copolyamide synthesized through copolymerization of two or more monomer components known as constituting an aliphatic polyamide (for example, monomer components constituting polyamide 6, polyamide 66, polyamide 610, polyamide 11, and polyamide 12). Examples of the copolyamide include polyamide 6/66, polyamide 6/12, polyamide 6/11, and polyamide 6/66/11.

The dimer acid-based polyamide (a-2) may be made from a raw material synthesized through dimerization of a natural vegetable oil fatty acid (an unsaturated fatty acid having 18 carbon atoms, such as oleic acid, linoleic acid, or the like).

The thermoplastic polyamide elastomer (a-3) may be a thermoplastic polyamide elastomer (including a dimer acid-based thermoplastic polyamide elastomer) containing polyether as a soft segment (amorphous phase) and a polyamide component as a hard segment (crystalline phase).

Among these, polyamide 6/12 is preferred in view of its excellent flexibility and adhesiveness.

The adhesive layer may be a mixed resin layer including the resin B in addition to the resin A. The resin B in this case is preferably an acid-modified polyolefin, ionomer, thermoplastic polyamide elastomer, or the like. In view of flexibility and adhesiveness in a low-temperature environment, the glass transition temperature is preferably less than 0 °C and the melting point is preferably in a range from 80 °C to 160 °C.

The adhesive layer may include an additive as appropriate, such as an anti-blocking agent, a lubricant, a nucleating agent, a flame retardant, an antistatic agent, an antioxidant, an ultraviolet absorber, a light stabilizer, a colorant, a filler, and the like, to an extent that does not impair practical properties such as adhesion. Among these, in view of further improving the blocking resistance of the adhesive layer, including an anti-blocking agent, a nucleating agent, and/or a lubricant is preferable, including an anti-blocking agent and/or a nucleating agent is more preferable, and including an anti-blocking agent and a nucleating agent is even more preferable.

The anti-blocking agent may be organic particles such as cross-linked polystyrene, cross-linked acrylic (PMMA) resin, fluorine (PTFE) particles, or the like, and may be inorganic particles such as silica particles, kaolin, calcium carbonate, or the like.

The nucleating agent may be talc, alumina, kaolin, a high melting point polyamide (that is, a polyamide having a melting point above 160 °C), or the like.

The lubricant may be an aliphatic amide, a metal soap, or the like.

The average thickness of the adhesive layer is preferably from 0.5 $\mu$m to 20 $\mu$m, more preferably from 1 $\mu$m to 15 $\mu$m, and even more preferably from 2 $\mu$m to 10 $\mu$m, in view of adhesive strength and flexibility.

-Outer layer-

The outer layer preferably includes a resin, and more preferably consists only of resin.

The resin to be used for the outer layer preferably has a higher melting point than that of the resin A. The resin to be used for the outer layer preferably has a higher melting point than that of the adhesive layer.

The melting point of the resin to be used for the outer layer is preferably at least 20 °C higher than the melting point of the resin A, more preferably at least 25 °C higher, and even more preferably at least 30 °C higher. The melting point of the resin to be used for the outer layer is determined based on an ease of fusing (sticking) to a heating roll used in the lamination step of lamination with the base fabric. Using a resin having a melting point 20 °C or higher than that of the resin A makes it less likely for fusing to the heating roll to occur, enabling stable lamination.

The melting point of the resin to be used for the outer layer is preferably from 150 °C to 240 °C, more preferably from 160 °C to 230 °C, and even more preferably from 170 °C to 220 °C. A melting point of 150 °C or higher suppresses fusion to a roll during thermal lamination and other processes, thereby suppressing pinhole formation.

When the resin A in the adhesive layer includes more than one resin and/or the outer layer includes more than one resin, the melting point of the mixed resin may be defined as a highest temperature among melting peak temperatures attributable to the resins included in the layer.

The glass transition temperature of the resin to be used for the outer layer is preferably 80 °C or lower, more preferably 70 °C or lower, and even more preferably 60 °C or lower, in view of flexibility.

The resin to be used for the outer layer is preferably a polyamide-based resin or a polyester-based resin, in view of obtaining an outer layer having excellent characteristics in terms of airtightness, abrasion resistance, flexibility, strength, dead-fold (meaning resistance to stress generated when folded), flame retardancy, slipperiness, and the like.

Examples of the aforementioned polyamide-based resin may include the polyamide-based resins (a-1, a-2, a-3) exemplified as the resin A in the adhesive layer, which may suitably be used alone or as a composition of a blend of two or more of the resins.

The polyester-based resin is preferably a thermoplastic polyester elastomer, examples of which include a thermoplastic polyester elastomer including a polyether component as a soft segment (polyether-polyester type), and a thermoplastic polyester elastomer including a polyester component as a soft segment (polyester-polyester type).

Examples of methods of identifying the components contained in each layer, such as the adhesive layer and outer layer of the multilayer film, include infrared analysis and nuclear magnetic resonance (NMR). Further, as another method of determining melting point and crystallization temperature, when the multilayer film is a bilayer film formed of the adhesive layer and the outer layer, the multilayer film may be sampled at a desired size and melting point may be determined according to the methods for measuring a melting point as described above. In the case of a multilayer film of three or more layers having intermediate layers between the adhesive layer and the outer layer, the multilayer film may be immersed in a solvent (such as hexafluoro-2-propanol) capable of only extracting the adhesive layer, and a resulting solution may be separated into the solvent and a solid component using an evaporator. The melting point of the solid component may be determined according to a melting point measurement method mentioned above.

The average thickness of the outer layer is preferably from 0.5 $\mu$m to 20 $\mu$m, more preferably from 1 $\mu$m to 15 $\mu$m, and even more preferably from 2 $\mu$m to 10 $\mu$m, in view of durability, flexibility, and pinhole suppression during thermal lamination.

-Intermediate layer-

The intermediate layer is preferably, for example, a layer made of a composition of one or a blend of a plurality of polyolefin-based resins such as a linear low-density polyethylene, a low-density polyethylene, a medium-density polyethylene, a high-density polyethylene, a polypropylene, an acid modified polyolefin-based resin, a polyolefin copolymer resin, a polyolefin-based thermoplastic elastomer, and an acid modified polyolefin-based elastomer. In view of flexibility, the intermediate layer preferably includes an acid-modified polyolefin-based resin (preferably acid-modified polyethylene), a polyolefin copolymer resin, and/or a polyolefin-based thermoplastic elastomer, is more preferably made of only an acid-modified polyolefin-based resin, a polyolefin copolymer resin and/or a polyolefin-based thermoplastic elastomer, and is even more preferably made of only an acid-modified polyolefin-based resin.

The average thickness of the intermediate layer is preferably from 1 $\mu$m to 30 $\mu$m, more preferably from 2 $\mu$m to 28 $\mu$m, and even more preferably from 3 $\mu$m to 25 $\mu$m, in view of flexibility and mechanical strength.

-Glue layer-

The glue layer is a layer for adhering the layers, and may be, for example, a layer made of an acid-modified polyolefin-based resin and/or a polyolefin thermoplastic elastomer having a polar functional group, such as an acid-modified polyethylene, an acid-modified polypropylene, or the like, which is preferably selected in consideration of usage requirements such as heat resistance and other properties.

The glue layer may be a layer consisting of only one resin, and may be a layer including multiple resins.

-Properties-

The following describes properties of the multilayer film.

The multilayer film is a film of at least two layers. The total average thickness of the multilayer film is preferably from 5 $\mu$m to 100 $\mu$m, more preferably from 10 $\mu$m to 80 $\mu$m, and even more preferably from 15 $\mu$m to 40 $\mu$m. These ranges are determined in order to achieve a balance between film strength, scrub resistance, and flexibility. A thickness of 5 $\mu$m or more provides good strength, 100 $\mu$m or less provides good flexibility, and 40 $\mu$m or less provides an excellent balance between scrub resistance and flexibility.

In the multilayer film, a ratio of the average thickness of the outer layer relative to the average thickness of the adhesive layer (where equal is 100 %) is preferably from 20 % to 500 %, and more preferably from 50 % to 400 %, in view of a balance between flexibility and scrub resistance.

When the multilayer film has a five layer structure of the outer layer, the glue layer, the intermediate layer, the glue layer, and the adhesive layer, the ratio of the average thickness of each layer to the average thickness of the adhesive layer (where equal is 100 %) is preferably from 10 % to 500 % for each of the glue layers, from 50 % to 1000 % for the intermediate layer, and from 10 % to 5000 % for the outer layer.

In order for the multilayer film to develop high adhesion to the base fabric, a large contact area and chemical bonding (for example, hydrogen bonding) with single yarns that make up the base fabric are preferable. If adhesive strength resulting from this chemical bonding has a small contact area, the adhesive strength may not be able to withstand internal pressure generated when the multilayer composite for an airbag is deployed, failing to sufficiently exhibit functionality required for airbags.

In view of obtaining sufficient adhesive strength between the multilayer film and the base fabric, the lower limit of the thickness ratio of the adhesive layer to the average thickness of the multilayer film, where the latter is 100 %, is preferably 1 %, more preferably 5 %, and even more preferably 10 %. In view of flexibility, the upper limit of the thickness ratio of the adhesive layer is preferably 50 %, more preferably 40 %, and even more preferably 30 %.

Further, the lower limit of the thickness ratio of the outer layer to the average thickness of the multilayer film, where the latter is 100 %, is preferably 5 %, more preferably 10 %, and even more preferably 20 %. Further, in view of flexibility, an upper limit of the thickness ratio of the outer layer is preferably 50 %, more preferably 40 %, and even more preferably 30 %.

-Production method-

Methods of producing the multilayer film include, for example, a method of co-extruding molten resin including each layer from a multilayer circular die and producing the film by an inflation method, and a T-die method of co-extruding molten resin from a T-die and cooling the film to solidify on a cast roll. Among these, inflation molding is preferred for excellent productivity.

When the inflation method is used, the die temperature may be from 170 °C to 280 °C, for example. The circular die may have the lip outer diameter of from 50 mm to 500 mm, and the lip clearance of from 0.5 mm to 10 mm, for example. The blow-up ratio may be from 1 to 10 times, the air ring temperature may be from -30 °C to 50 °C, a distance between the circular die and a pinch roll may be from 1 m to 100 m, and the take-up speed may be from 1 m/min to 200 m/min.

(Base fabric)

The base fabric is a support for the multilayer film in the multilayer composite for an airbag, and makes the airbag maintain a specific three-dimensional structure when deployed.

The base fabric is preferably made of synthetic fibers in order to be heat resistant to withstand high-temperature gas from the inflator, deployable, strong enough to withstand rapid expansion and impact, airtight, storable, etc. A synthetic fiber fabric (for example, a fabric made solely of synthetic fibers) is preferred.

The mass ratio of the synthetic fibers to the total amount of the base fabric (100 mass%) is preferably at least 20 mass%, and more preferably from 50 mass% to 100 mass%.

Synthetic fibers that make up the base fabric or the synthetic fiber fabric include, for example, polyamide fibers, polyester fibers, polyolefin-based fibers, chlorine-containing fibers, fluorine-containing fibers, polyacetal-based fibers, polysulfone-based fibers, polyphenylene sulfide (PPS)-based fibers, polyether ether ketone (PEEK)-based fibers, wholly aromatic polyamide-based fibers, wholly aromatic polyester-based fibers, polyimide-based fibers, polyetherimide-based fibers, polyparaphenylene benzobisoxazole (PBO)-based fibers, vinylon-based fibers, acrylic-based fibers, cellulose-based fibers, silicon carbide-based fibers, alumina-based fibers, glass-based fibers, carbon-based fibers, steel-based fibers, and the like. Among these, fibers having hydrogen bonding ability with the resin included in the adhesive layer (preferably, the most abundant resin in the adhesive layer) are preferred, and in view of strength, specific gravity, cost, and adhesion strength with the multilayer film, polyamide fibers and polyester fibers are more preferred.

The total linear density of the fibers constituting the base fabric is preferably from 100 dtex to 1000 dtex, more preferably from 210 dtex to 570 dtex, and even more preferably from 330 dtex to 490 dtex. The total linear density of 100 dtex or more allows withstanding tension during deployment and expansion. The total linear density of 1000 dtex or less makes the fabric more flexible, improves storability, and allows for faster deployment.

The linear density of single yarns constituting the base fabric is preferably from 0.5 dtex to 8 dtex, and more preferably from 1.5 dtex to 3.7 dtex. The single yarn linear density of 0.5 dtex or more may suppress warp fluffing during weaving. Further, the single yarn linear density of 8 dtex or less allows the fabric to have flexibility.

The fiber density of the base cloth is preferably from 40 fibers to 80 fibers per 2.54 centimeters in order to increase an adhesion area between the multilayer film and the base fabric. From 50 fibers to 80 fibers per 2.54 centimeters is preferable in view of excellent adhesion and tear strength when used in a multilayer composite for an airbag.

The above fiber density is measured in accordance with JIS L 1096.

The cover factor (CF) of the base fabric is from 1800 to 2400, preferably from 1900 to 2300, and even more preferably from 1900 to 2200, in view of both mechanical properties and hardness. A CF of 1800 or more provides excellent base fabric strength. On the other hand, the smaller the CF, such as 2400 or less, the softer the base fabric. Further, the smaller the CF, the lighter the fabric weight, and therefore 2300 or less is preferred.

Normally, the smaller the CF, the more ventilation gaps occur between woven yarns, but a laminate covering may be provided to suppress ventilation. CF is expressed by the following formula (1).

$$CF = (0.9 \times d)^{1/2} \times (2 \times W) \qquad (1)$$

(In the above formula (1), d is the average total linear density of component yarns in the warp direction (dtex) and W is the average weft density in the warp direction (fibers/2.54 cm)).

The average thickness of the base fabric is preferably from 0.15 mm to 0.45 mm, more preferably from 0.17 mm to 0.40 mm, and even more preferably from 0.20 mm to 0.35 mm. The average thickness of the base fabric of 0.15 mm or more allows heat and stress during deployment and expansion to be withstood. The average thickness of the base fabric of 0.40 mm or less improves storability. The thickness is measured at a set pressure of 1 kPa with a measuring element of 10.5 mm in diameter, in accordance with ISO 5084.

(Composite properties)

Properties of the multilayer composite for an airbag according to the present embodiment are described below.

The multilayer composite for an airbag of the present embodiment has a ratio (Sdr1/Sdr2) from 0.986 to 1.1, where Sdr1 is the interface deployment area ratio of the multilayer film side surface of the multilayer composite for an airbag and Sdr2 is the interface deployment area ratio of the base fabric side surface of the multilayer composite for an airbag. The lower limit of the ratio is preferably 0.988, and more preferably 0.990, and the upper limit of the ratio is preferably 1.08, and more preferably 1.05. When Sdr1/Sdr2 is in the above range, durability (scrub resistance) against abrasion during storage and friction during expansion is improved, and delamination between the multilayer film and base fabric may be further suppressed. Further, Sdr1/Sdr2 may be greater than 1.

When the multilayer film is adhered to the base fabric by thermal lamination, gaps may occur between the multilayer film and the base fabric due to unevenness of the base fabric. In the case of a composite with many gaps, the ratio of the interface deployment area ratio of the multilayer film side surface Sdr1 to the interface deployment area ratio of the base fabric side surface Sdr2 of the multilayer composite for an airbag (Sdr1/Sdr2) is less than 0.986. Conversely, (Sdr1/Sdr2) may be increased by reducing air gaps between the multilayer film and the base fabric.

The reason for this is thought to be that, for example, when a film with air gaps is heat-treated, the air gaps disappear while the multilayer film is drawn into the former air gaps, resulting in larger unevenness on the multilayer film surface side after the heat treatment. Therefore, Sdr1 becomes larger relative to Sdr2.

The interface deployment area ratio (Sdr1/Sdr2) may be measured by a method described in Examples below.

Cutoff values ($\lambda$c and $\lambda$f) used in measurement (data processing) of the interface deployment area ratio of the multilayer composite for an airbag ($\lambda$c = 200 $\mu$ and $\lambda$f = 500 $\mu$) are preferably used when the range of the fiber density of the base fabric is from 40 fibers to 80 fibers per 2.54 centimeters.

When Sdr1/Sdr2 is low after thermal lamination, subsequent heat treatment or the like may be performed to increase Sdr1/Sdr2. Further, suitable multilayer films as described above may be used or the production may be carried out under production conditions described below, to thereby control Sdr1/Sdr2 to be in the range described above. A thinner multilayer film facilitates making Sdr1/Sdr2 greater than 0.986, and therefore the thickness of the multilayer film is preferably 39 $\mu$m or less, and more preferably from 10 $\mu$m to 30 $\mu$m. The smaller the total linear density of the base fabric, the smaller the air gaps between film and fibers, which is desirable because it allows Sdr1/Sdr2 to be larger.

According to the composite of the present embodiment, Sdr1 may be made larger than Sdr2 by application of a treatment that makes the multilayer film side surface more uneven. As a treatment that imparts unevenness, the multilayer film surface side may be pressed by an uneven solid, for example.

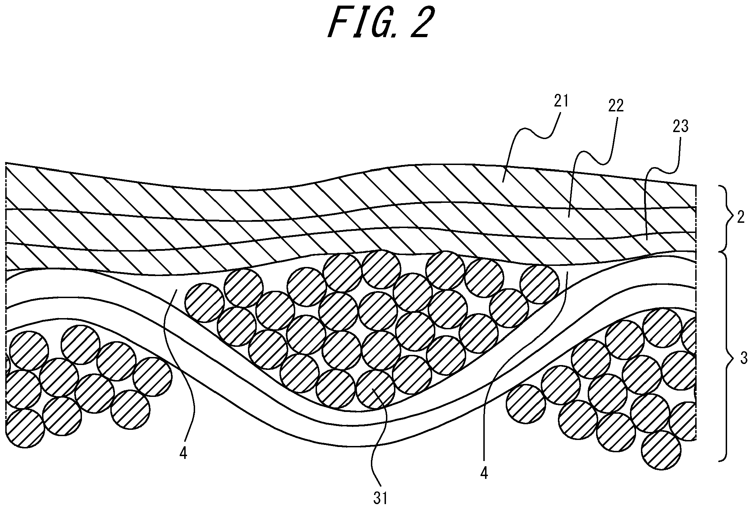

According to the composite of the present embodiment, the fewer air gaps between the multilayer film and the base fabric, the better. Having fewer air gaps provides excellent adhesive strength and improved scrub resistance. (FIG. 2)

An air gap length of the composite between the multilayer film and the base fabric is preferably 6 $\mu$m or less, more preferably 4 $\mu$m or less, and even more preferably 2 $\mu$m or less. The air gap length may be measured by the method described in Examples below.

To reduce air gaps, thermal lamination may be implemented at high temperature, high pressure, or for prolonged time, or subsequent heat treatment or the like may be performed. Among these, in view of improving productivity, the lamination may be implemented preferably at low pressure for a short heating period, followed by subsequent heat treatment of the composite to reduce air gaps between the film and the base fabric.

The number of scrubs for the composite of the present embodiment to withstand is preferably from 1000 times to 3000 times, more preferably from 1500 times to 3000 times, in view of scrubbing resistance.

The number of scrubs may be measured by the method described in Examples below. The number of scrubs to withstand may be set in the above range by setting the Sdr1/Sdr2 ratio in the range described above, and by setting properties of the air gaps between the multilayer film and the base fabric in the ranges described above.

The loop stiffness of the composite of the present embodiment is preferably from 100 mN/cm to 300 mN/cm, and more preferably from 100 mN/cm to 250 mN/cm.

The "loop stiffness" refers to a value of stress required to bend a membrane sample such as a film into a loop and compress the loop by a defined amount in a direction of loop diameter, and thus the value is used to evaluate strength and weakness of stiffness of the composite. The loop stiffness may be measured by the method described in Examples below. The loop stiffness may be set in the above range by setting the Sdr1/Sdr2 ratio in the range described above, and by setting properties of the air gaps between the multilayer film and the base fabric in the ranges described above.

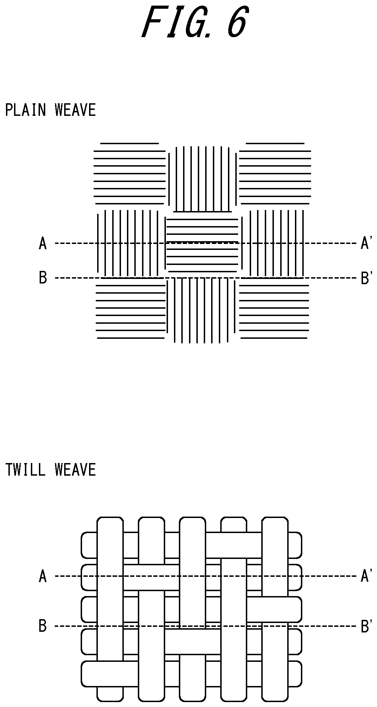

In view of further improving the adhesion strength between the multilayer film and the base fabric and further increasing the strength of the composite of the present embodiment, the average film thickness of the composite after lamination may be smaller than the average film thickness before lamination. One reason for the smaller average film thickness is that film melts during lamination and fills the air gaps in recesses of the base fabric or permeates between the fibers of the base fabric. At this time, the resin of the A-A' cross section illustrated in FIG. 6 melts and moves to fill the air gaps in the B-B' cross section, resulting in a larger variation in film thickness.

A method of measuring the average film thickness of the composite includes measuring the thickness of the multilayer film at every 100 $\mu$m in a direction perpendicular to the thickness direction for the same number of thickness direction A-A' and B-B' cross sections. This measurement may be made, for example, for 10 mm perpendicular to the thickness direction to obtain 100 thickness values. The arithmetic mean of the thickness values thus obtained (for example, 100 thickness values) is then used as the average film thickness of the composite.

(Method of producing composite)

The method of producing the multilayer composite for an airbag according to the present embodiment is described below.

The method of producing the multilayer composite for an airbag according to the present embodiment preferably includes a thermal lamination step of heat laminating the base fabric and the multilayer film including the outer layer and the adhesive layer with the adhesive layer on one surface of the base fabric. The method further preferably includes a subsequent heating step of heating the product again after the thermal lamination process.

As a method of producing the composite, exemplary methods include: a roll type thermal lamination method, in which the multilayer film and the base fabric are overlapped and continuously laminated roll-to-roll using a heating roll; a belt type thermal lamination method, in which the multilayer film and the base fabric are overlapped and then fed between a pair of heated belts and heat-laminated under pressure; a vacuum lamination method, in which the lamination is performed under reduced pressure; a lamination method using a hot press; and the like.

As a heating condition during the thermal lamination, thermal lamination is preferably performed in a temperature range from the melting point of the resin in the adhesive layer (preferably, the resin most abundant in the adhesive layer) to the melting point + 40 °C.

As a pressure condition during the thermal lamination, 1 N/cm to 30 N/cm is preferred for the roll type thermal lamination and 1 N/cm$^2$ to 20 N/cm$^2$ is preferred for the belt type lamination and hot type lamination, and 10 N/cm to 20 N/cm is more preferred for the roll type lamination and 5 N/cm$^2$ to 20 N/cm$^2$ is more preferred for the belt type lamination and hot type lamination.

A speed condition is preferably from 0.1 m/min to 10 m/min and more preferably from 0.1 m/min to 5 m/min for the roll type lamination, and preferably from 0.1 m/min to 30 m/min and more preferably from 0.5 m/min to 10 m/min for the belt type lamination.

A preferred heating time for hot press lamination is from 1 s to 180 s, more preferably from 5 s to 60 s, and even more preferably from 10 s to 60 s.

The multilayer composite for an airbag of the present embodiment may be produced without subsequent heat treatment.

As an example without subsequent heat treatment, in the roll type lamination, the pressure is preferably from 10 N/cm to 20 N/cm and more preferably from 10 N/cm to 15 N/cm, the speed is preferably from 0.1 m/min to 5 m/min and more preferably from 0.1 m/min to 0.3 m/min, and the temperature is preferably from the melting point of the resin in the adhesive layer (preferably the resin most abundant in the adhesive layer) to the melting point + 40 °C, and more preferably from the melting point + 10 °C to the melting point + 40 °C. In the belt type lamination and hot press lamination, the pressure is preferably from 1 N/cm$^2$ to 30 N/cm$^2$ and more preferably from 3 N/cm$^2$ to 8 N/cm$^2$, the heating time is preferably from 1 s to 90 s and more preferably from 30 s to 60 s, and the temperature is preferably from the melting point of the resin in the adhesive layer (preferably the resin most abundant in the adhesive layer) to the melting point + 40 °C, and more preferably from the melting point + 10 °C to the melting point + 40 °C.

The composite according to the present embodiment is preferably subjected to subsequent heat treatment. The subsequent heat treatment may increase Sdr1/Sdr2 and reduce the air gaps between the multilayer film and the base fabric.

The subsequent heat treatment may be performed by, for example, a method of treating the composite by successively bringing the composite into contact with a heating roll, a method of successively heat treating the composite by applying heat using hot air or an infrared heater and thus without contacting the composite, and the like.

A preferred subsequent heat treatment temperature is from the melting point of the resin in the adhesive layer of the multilayer film (preferably the resin most abundant in the adhesive layer) to less than the melting point of the resin in the outer layer (preferably the resin most abundant in the adhesive layer), in view of melting of the adhesive layer to more firmly adhere to the base fabric, reduction of the air gaps between the base fabric and the multilayer film, and suppressing pinholes by maintaining the strength of the multilayer film without melting the outer layer. For example, the subsequent heat treatment temperature is preferably less than the melting point of the resin in the outer layer (preferably the most abundant resin in the outer layer) and equal to or greater than the melting point of the resin in the adhesive layer of the multilayer film (preferably the most abundant resin in the adhesive layer) + 10 °C.

The subsequent heat treatment temperature is more preferably from -40 °C to -10 °C from the melting point of the resin in the outer layer (preferably the resin most abundant in the outer layer), and even more preferably from -30 °C to -10 °C from the melting point of the resin in the outer layer (preferably the resin most abundant in the outer layer).

Further, the subsequent heat treatment temperature is preferably higher than the heating temperature during the thermal lamination, more preferably at least 10 °C more than the heating temperature during the thermal lamination, and even more preferably at least 20 °C more than the heating temperature during the thermal lamination.

Time for the subsequent heat treatment is preferably from 0.5 min to 10 min, more preferably from 1 min to 5 min, and even more preferably from 2 min to 4 min, in view of the resin in the adhesive layer being able to melt, and suppression of a decrease in scrub resistance and an increase in loop stiffness due to film resin permeating into the base fabric fiber as a result of prolonged heating of the multilayer film.

(Airbag)

The multilayer composite for an airbag according to the present embodiment may be used as an airbag. The airbag preferably includes the composite of the multilayer film and the synthetic fiber fabric (the base fabric). The airbag is preferably formed by laminating the adhesive layer of the multilayer film and the synthetic fiber fabric.

The airbag may be used as a vehicle airbag such as a front airbag, a side airbag, a side curtain airbag, an exterior airbag, and the like. Among these, a side curtain airbag is required to not only protect an occupant from an impact of a side collision, but also to prevent the occupant from being ejected from a side roof in the event of a rollover. Therefore, a side curtain airbag needs to be able to block an entire side roof immediately and remain inflated for a longer period of time than a front airbag, and it is desirable to have not only airtightness but also higher adhesive strength between the barrier material and the base fabric, and therefore the multilayer film of the present disclosure is more suitable for use as the barrier material.

EXAMPLES

The following Examples are illustrative of the present disclosure. However, the present disclosure is not limited to the following Examples.

(Raw material)

Raw materials and notations thereof used in the Examples and Comparative Examples are indicated below. Glass transition temperature (hereinafter also referred to as Tg) and melting point (hereinafter also referred to as Tm) of each raw material are values obtained using a dynamic viscoelasticity measuring machine and differential scanning calorimetry (DSC) as described below.

<Adhesive layer>

(Resin)

Copolyamide (CoPA) 1: Trade name "Ube Nylon 7128B" (manufactured by UBE Corporation) copolyamide 6/12 (Tg = 47 °C, Tm = 128 °C)

Acid modified polyethylene (m-PE): Trade name "Admer NF587" (manufactured by Mitsui Chemicals, Inc.) acid modified polyethylene (Tg = -24 °C, Tm = 121 °C)

(Additive)

Additives added to the adhesive layer are listed below. To add an additive to the resin, a master batch containing 5 mass% of the additive was melted and kneaded in advance in a twin-screw extruder (TEM-18SS) manufactured by Toshiba Machine Co. Ltd., at a temperature of 180 °C and screw speed of 100 rpm, and then pelletized. The pellets (master batch) were dry blended with the resin. The multilayer film was then produced by an inflation method described below.

· Anti-blocking agent (AB agent): Trade name: Silton JC-70 (manufactured by Mizusawa Industrial Chemicals, Ltd.), composition name: sodium calcium aluminosilicate, shape: spherical, average particle diameter: 7 $\mu$m.

· Nucleating agent (NA agent): Trade name: Micro Ace P-8 (manufactured by Nippon Talc Co., Ltd.), composition: talc, shape: scale, average particle diameter: 3.3 $\mu$m.

intermediate layer>

m-PE: Trade name "Admer NF587" (manufactured by Mitsui Chemicals, Inc.) acid modified polyethylene (Tg = -24 °C, Tm = 121 °C)

<Outer layer>

Thermoplastic polyamide elastomer (TPAE): Trade name "UBESTA XPA 9063F1" (manufactured by UBE Corporation) high melting point thermoplastic polyamide elastomer (Tg = 24 °C, Tm = 172 °C)

CoPA 4: Trade name "NAV503X10" (manufactured by UBE Corporation) copolyamide 6/66 (Tg = 43 °C, Tm = 190 °C)

Measurement methods for each property are described below.

(Melting point)

A sheet 150 $\mu$m thick was prepared on a P2-30T-400 press molding machine manufactured by Toyo Seiki Seisaku-sho, Ltd. The melting point was defined as a melting peak temperature obtained at a temperature increase rate of 10 °C/min using DSC ('Diamond DSC', manufactured by PerkinElmer Inc.). Samples were collected according to the following press molding conditions.

(Glass transition temperature)

A sheet 0.9 mm thick was prepared on a P2-30T-400 press molding machine manufactured by Toyo Seiki Seisaku-sho, Ltd. A loss tangent tan$\delta$ was measured on a dynamic viscoelasticity measuring machine ('MCR301', manufactured by Anton Paar GmbH). The peak temperature of the loss tangent tan$\delta$ was defined as the glass transition temperature.

· Measuring mode: torsion (measuring attachment: SRF10)

· Sample: thickness = 0.9 mm, width = 10 mm, measurement span = 38 mm

· Normal force: -0.3 N

· Arc angle: 0.1 %

· Frequency: 1 Hz

· Temperature increase rate: 2 °C/min

(Ratio of interface deployment area ratio (Sdr1/Sdr2))

After measuring three-dimensional data of the multilayer film surface and the base fabric surface using a non-contact 3D measuring system (Hyper Quick Vision, manufactured by Mitutoyo Corporation) and calculating waviness curves of the multilayer film surface and the base fabric surface using cutoff values ($\lambda c$ = 200 $\mu$, $\lambda f$ = 500 $\mu$), the interface deployment area ratio of the multilayer film surface (Sdr1) and the interface deployment area ratio (Sdr2) of the base fabric surface were calculated according to JIS B 0681-6 (2014). The following criteria were used to evaluate Sdr1/Sdr2.

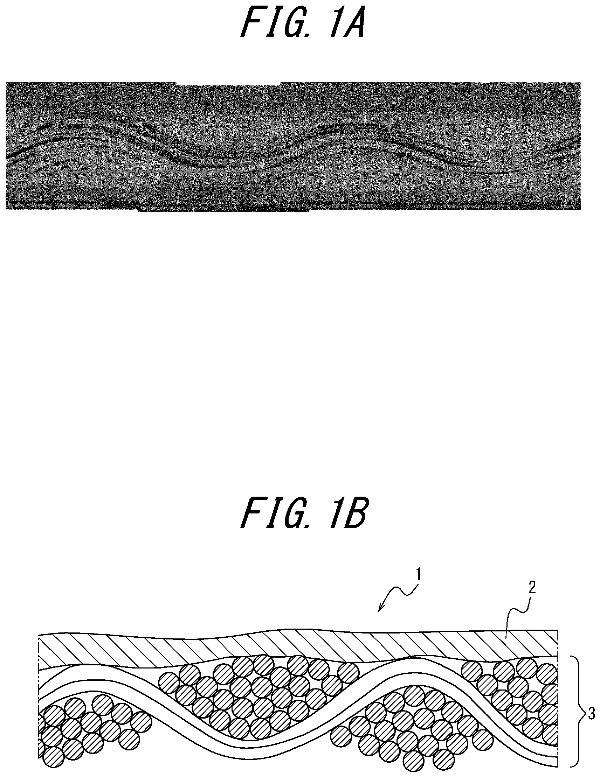

The multilayer film surface refers to the composite surface opposite the base fabric side of the multilayer film (FIGS. 1A, 1B). The base fabric surface refers to the composite surface opposite the multilayer film side of the base fabric (FIGS. 1A, 1B). The more the multilayer film follows the surface of the base fabric, the closer the values of Sdr1 and Sdr2 are (FIG. 1B). FIG. 1A is a microscope photograph of an arbitrary thickness-direction cross-section of the multilayer composite for an airbag treated with an embedding agent.

-Criteria-

Double circle (Excellent): Sdr1/Sdr2 is 0.988 or more
Circle (Good): Sdr1/Sdr2 is from 0.986 to less than 0.988.
Cross (Poor): Sdr1/Sdr2 is less than 0.986

(Scrub resistance)

Tests were conducted according to ISO 5981 using a scrub tester (manufactured by Imoto Machinery Co., Ltd.), and, for each Example and Comparative Example, the number of tests performed was counted until the multilayer film began to peel off from the multilayer composite for an airbag. The test was repeated four times for each sample and the average value was determined.

<Scrub tester specifications and test conditions>

· Test load foot (10 mm width) = 5 N, additional load = 10 N added
· Reciprocation speed 2.3 times/s
· Conditioning of samples 23 °C, 50 % relative humidity (RH), 24 h or more
· Test environment 23 °C, 50 % RH

Criteria for number of scrubs (average)

Cross (Extremely poor): from 0 times to less than 500 times
Triangle (Poor): from 500 times to less than 1,000 times
Circle (Good): from 1,000 times to less than 1,500 times
Double circle (Excellent): 1500 times or more

The higher the number of scrubs, the less likely the base fabric and the multilayer film are to peel off during rubbing, meaning superior rub resistance.

(Length of air gaps between film and base fabric)

The composites obtained in the Examples and the Comparative Examples were cut in the thickness direction along the A-A' and B-B' positions illustrated in FIG. 6, and the cut sections were observed by a scanning electron microscope (SEM). The length of the air gaps between the multilayer film and the base fabric on each cut section was evaluated based on the following criteria.

-Criteria-

With the average of the A-A' cross-section air gap length and the B-B' cross-section air gap length being a composite air gap length,

Double circle (Excellent): composite air gap length is less than 2 $\mu$m

Circle (Good): composite air gap length is from 2 $\mu$m to less than 6 $\mu$m

Cross (Poor): composite air gap length is 6 $\mu$m or more

From the aforementioned cut sections, the air gap length between the multilayer film and the base fabric was measured by the following method.

A distance is measured in the thickness direction between the base fabric and the multilayer film (the length of the air gap 4 between the multilayer film 2 and the base fabric 3 in FIG. 2) at a face where the base fabric and the adhesive layer are joined. That is, when there is no air gap, the distance is zero, and the length in the thickness direction of the air gap is measured only if there is an air gap. The above distance was measured consecutively for a length of 10 mm in the direction perpendicular to the thickness direction of the cut surface, and the arithmetic mean of the measurements was used as the air gap length between the multilayer film and the base fabric. The air gap length of the A-A' cross section and the air gap length of the B-B' cross section were measured. The average of the air gap length of the A-A' cross section and the air gap length of the B-B' cross section was taken as the composite air gap length. Results are listed in Tables 1 and 2.

(Loop stiffness)

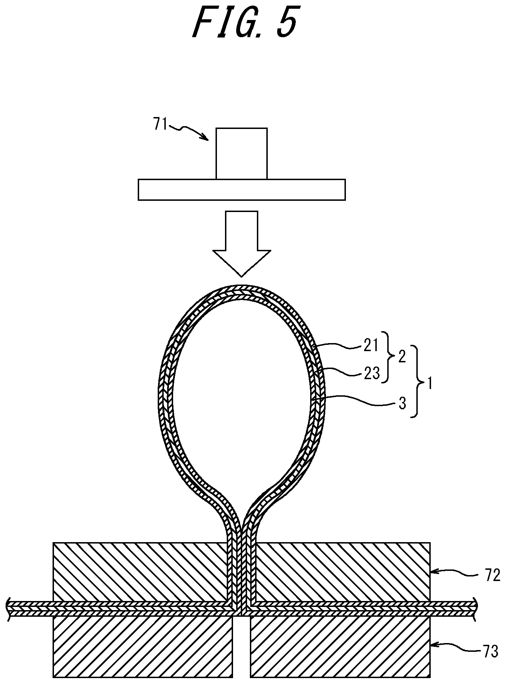

Five samples were taken from the multilayer composite for an airbag obtained in the Examples and Comparative Examples, 20 mm in the transverse direction (TD) (weft direction of Ny66 base fabric) and 120 mm in the machine direction (MD) (warp direction of the Ny66 base fabric), and set on a sample stand of a loop stiffness tester (manufactured by Toyo Seiki Co., Ltd.) with the multilayer film side facing the outside of the loop, where crushing stress of a 30 mm loop was measured (see FIG. 5). The value of loop stiffness was calculated as the average of five values measured at different locations and converted to 1 cm width.

<Measurement conditions>

· Conditioning of samples: 23 °C, 50 % RH, 24 h or more
· Test environment: 23 °C, 50 % RH
· Sample size: 20 mm wide x 120 mm long
· Measurement speed: 3.3 mm/s

<Evaluation Criteria>

Double circle (Excellent): less than 250 mN/cm
Circle (Good): from 250 mN/cm to less than 300 mN/cm
Triangle (Poor): from 300 mN/cm to less than 350 mN/cm
Cross (Bad): 350 mN/cm or more

[Film 1]

A three-type three-layer multilayer film (outer layer, intermediate layer, adhesive layer in a 20/70/10 ratio) was extruded from a multilayer circular die using CoPA 1 mixed with the above additives for the adhesive layer, m-PE for the intermediate layer, and CoPA 4 for the outer layer, and the three-type three-layer multilayer film was obtained by the inflation method (FIG. 3) to have a thickness in a range from 10 $\mu$m to 40 $\mu$m. The conditions for film formation were as follows.

· Die temperature setting: 210 °C
· Circular die: lip outer diameter = 95 mm, lip clearance = 3 mm
· Blow-up ratio: 1.1 times
· Air ring temperature: 22 °C
· Film surface temperature just before pinch roll: 32 °C
· Distance between circular die and pinch roll: 2.4 m
· Take-up speed: 12 m/min

[Film 2]

A two-type two-layer multilayer film (outer layer, adhesive layer in a 20/80 ratio) was extruded from a multilayer circular die using m-PE mixed with the above additives for the adhesive layer and TPAE for the outer layer, and the two-type two-layer multilayer film was obtained by the inflation method to have a thickness of 30 $\mu$m.

[Base fabric 1]

Base fabric material (nylon 66), total linear density 470 dtex, fiber density (50 fibers/inch warp, 50 fibers/inch weft), cover factor 2060

[Base fabric 2]

Base fabric material (nylon 66), total linear density 230 dtex, fiber density (72 fibers/inch warp, 72 fibers/inch weft), cover factor 2070

[Base fabric 3]

Base fabric material (polyester), total linear density 550 dtex, fiber density (51 fibers/inch warp, 51 fibers/inch weft), cover factor 2270

[Example 1]

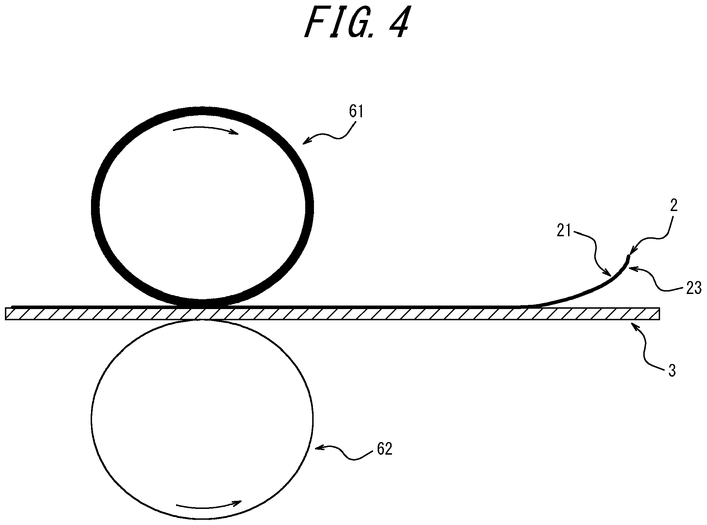

The film 1 (10 $\mu$m thick) and the base fabric 1 were overlapped so that the surface of the base fabric 1 and the adhesive layer of the film 1 faced each other, the multilayer film brought into contact with a silicone rubber roll side of a thermal roll laminator (FIG. 4) that was used to adhere and laminate the film 1 and the base fabric 1. The thermal lamination conditions at this time were as follows.

Temperature: 160 °C
Linear pressure: 15 N/cm
Roll speed: 3 m/min

The resulting laminate was then cooled to room temperature and subsequently heated in a precision thermostat Fine Oven (DH62: manufactured by Yamato Scientific Co., Ltd.) at a temperature of 190 °C for 3 minutes to obtain a multilayer composite, and the composite thus obtained was evaluated. Results are listed in Table 1.

[Example 2]

The multilayer composite was obtained in the same way as in Example 1, except that the film 1 having a thickness of 20 $\mu$m was used.

[Example 3]

The multilayer composite was obtained in the same way as in Example 1, except that the film 1 having a thickness of 30 $\mu$m was used.

[Example 4]

The multilayer composite was obtained in the same way as in Example 1, except that the film 2 having a thickness of 30 $\mu$m was used.

[Comparative Example 1]

The multilayer composite was obtained in the same way as in Example 1, except that no subsequent heat treatment was performed.

[Comparative Example 2]

The multilayer composite was obtained in the same way as in Example 2, except that no subsequent heat treatment was performed.

[Comparative Example 3]

The multilayer composite was obtained in the same way as in Example 3, except that no subsequent heat treatment was performed.

[Comparative Example 4]

The multilayer composite was obtained in the same way as in Comparative Example 1, except that the film 1 having a thickness of 40 $\mu$m was used.

[Comparative Example 5]

The multilayer composite was obtained in the same way as in Example 1, except that the film 1 having a thickness of 40 $\mu$m was used, the roll speed during thermal lamination was set to 0.3 m/min, and the subsequent heat treatment conditions were 150 °C for 3 min.

[Comparative Example 6]

The multilayer composite was obtained in the same way as in Example 5, except that film 2 having a thickness of 30 $\mu$m was used and no subsequent heat treatment was performed.

[Comparative Example 7]

The multilayer composite was obtained in the same way as in Example 1, except that the film 1 having a thickness of 40 $\mu$m was used.

[Example 5]

The film 1 (20 $\mu$m thick) and the base fabric 1 were overlapped so that the surface of the base fabric 1 and the adhesive layer of the film 1 faced each other, and hot pressed using a lab press (P2-30T-400, manufactured by Toyo Seiki Co., Ltd.) to obtain the multilayer composite. The hot press conditions at this time were as follows.

Temperature: 170 °C
Surface pressure: 5 N/cm$^2$
Time: 0.5 m

[Example 6]

The multilayer composite was obtained in the same way as in Example 5, except that the hot press time was set to 1 min.

[Example 7]

The multilayer composite was obtained in the same way as in Example 5, except that the film 1 having a thickness of 30 $\mu$m was used.

[Example 8]

The multilayer composite was obtained in the same way as in Example 5, except that the hot press conditions were a temperature of 170 °C, a surface pressure of 18 N/cm$^2$, and a time of 0.3 min.

[Comparative Example 8]

The multilayer composite was obtained in the same way as in Example 5, except that the film 1 having a thickness of 40 $\mu$m was used and the hot press conditions were a temperature of 170 °C, a surface pressure of 5 N/cm$^2$, and a time of 1 min.

[Comparative Example 9]

The multilayer composite was obtained in the same way as in Comparative Example 8, except that the hot press conditions were set to a surface pressure of 18 N/cm$^2$ and a time of 1 min.

[Comparative Example 10]

The multilayer composite was obtained in the same way as in Comparative Example 9, except that the hot press time was set to 2 min.

[Example 9]

The multilayer composite was obtained in the same way as in Example 2, except that the base fabric 2 was used instead of the base fabric 1.

[Example 10]

The multilayer composite was obtained in the same way as in Example 2, except that base fabric 3 was used instead of the base fabric 1.
The multilayer composites obtained in the Examples and Comparative Examples were evaluated, and results are listed in Tables 1, 2, and 3.

[Table 1]

| | | | Unit | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|
| Multilayer composite for an airbag | Multilayer film | Outer layer | - | PA6/66 | PA6/66 | PA6/66 | TPAE | PA6/66 | PA6/66 | PA6/66 | PA6/66 | PA6/66 | TPAE | PA6/66 |
| | | Intermediate layer | - | m-PE | m-PE | m-PE | - | m-PE | m-PE | m-PE | m-PE | m-PE | - | m-PE |
| | | Adhesive layer | - | PA6/12 | PA6/12 | PA6/12 | m-PE | PA6/12 | PA6/12 | PA6/12 | PA6/12 | PA6/12 | m-PE | PA6/12 |
| | | Thickness | μm | 10 | 20 | 30 | 30 | 10 | 20 | 30 | 40 | 40 | 30 | 40 |
| | | Layer thickness ratio (Outer layer/intermediate layer/adhesive layer) | % | 20/70/10 | 20/70/10 | 20/70/10 | 20/-/80 | 20/70/10 | 20/70/10 | 20/70/10 | 20/70/10 | 20/70/10 | 20/-/80 | 20/70/10 |
| | Base fabric | Material properties | - | nylon 66 | nylon 66 | nylon 66 | nylon 66 | nylon 66 | nylon 66 | nylon 66 | nylon 66 | nylon 66 | nylon 66 | nylon 66 |
| | | Linear density | dtex | 470 | 470 | 470 | 470 | 470 | 470 | 470 | 470 | 470 | 470 | 470 |
| | | Fiber density (warp/weft directions) | fibers/inch | 50/50 | 50/50 | 50/50 | 50/50 | 50/50 | 50/50 | 50/50 | 50/50 | 50/50 | 50/50 | 50/50 |
| Production conditions | Lamination process (thermal roll lamination) | Temperature | °C | 160 | 160 | 160 | 160 | 160 | 160 | 160 | 160 | 160 | 160 | 160 |
| | | Linear pressure | N/cm | 15 | 15 | 15 | 15 | 15 | 15 | 15 | 15 | 15 | 15 | 15 |
| | | Velocity | m/min | 3 | 3 | 3 | 3 | 3 | 3 | 3 | 3 | 0.3 | 3 | 3 |
| | Subsequent heat treatment | Temperature | °C | 190 | 190 | 190 | 190 | N/A | N/A | N/A | N/A | 150 | N/A | 190 |
| | | Time | min | 3 | 3 | 3 | 3 | N/A | N/A | N/A | N/A | 3 | N/A | 3 |

| | | | Unit | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|
| Evaluation | Product cross-section structure | Film surface deployment area ratio (Sdr1) | - | 1.020 | 1.020 | 1.017 | 1.034 | 1.004 | 1.009 | 1.002 | 1.012 | 1.012 | 1.010 | 1.014 |
| | | Base fabric surface deployment area ratio (Sdr2) | - | 1.030 | 1.030 | 1.030 | 1.030 | 1.030 | 1.030 | 1.030 | 1.030 | 1.030 | 1.030 | 1.030 |
| | | Interface deployment area ratio (Sdr1/Sdr2) | - | 0.990 | 0.990 | 0.987 | 1.004 | 0.975 | 0.980 | 0.973 | 0.983 | 0.983 | 0.981 | 0.984 |
| | | | - | ◎ | ◎ | O | ◎ | × | × | × | × | × | × | × |
| | | Air gap between film and base fabric — A-A' cross section | μm | 0.26 | 0.26 | 0.26 | 0.26 | 0.26 | 2.36 | 6.26 | 12.72 | 6.23 | 5.23 | 0.27 |
| | | B-B' cross section | μm | 11.56 | 10.49 | 6.16 | 6.38 | 15.36 | 11.2 | 13.26 | 17.43 | 6.36 | 11.5 | 6.45 |
| | | Composite | μm | 5.91 | 5.375 | 3.21 | 3.32 | 7.81 | 6.78 | 9.76 | 15.075 | 6.295 | 8.37 | 3.36 |
| | | Evaluation | - | ○ | ○ | ○ | ○ | × | × | × | × | × | × | ○ |
| | Laminated base fabric properties | Scrub resistance | times | 1475 | 2050 | 1300 | 2050 | 150 | 200 | 200 | 675 | 525 | 200 | 400 |
| | | | - | O | ◎ | O | ◎ | × | x | x | Δ | Δ | x | x |
| | | Loop stiffness (flexibility, ease of folding) | mN/cm | 197 | 231 | 280 | 260 | 170 | 222 | 280 | 341 | 342 | 250 | 342 |
| | | | - | ◎ | ◎ | ○ | O | ◎ | ◎ | O | Δ | Δ | O | Δ |

EP 4 289 679 A1

[Table 2]

| | | | Unit | Example 5 | Example 6 | Example 7 | Example 8 | Comparative Example 8 | Comparative Example 9 | Comparative Example 10 |
|---|---|---|---|---|---|---|---|---|---|---|
| Multilayer composite for an airbag | Multilayer film | Outer layer | - | PA6/66 | PA6/66 | PA6/66 | PA6/66 | PA6/66 | PA6/66 | PA6/66 |
| | | Intermediate layer | - | m-PE | m-PE | m-PE | m-PE | m-PE | m-PE | m-PE |
| | | Adhesive layer | - | PA6/12 | PA6/12 | PA6/12 | PA6/12 | PA6/12 | PA6/12 | PA6/12 |
| | | Thickness | μm | 20 | 20 | 30 | 20 | 40 | 40 | 40 |
| | | Layer thickness ratio (Outer layer/intermediate layer/adhesive layer) | % | 20/70/10 | 20/70/10 | 20/70/10 | 20/70/10 | 20/70/10 | 20/70/10 | 20/70/10 |
| | Base fabric | Material properties | - | nylon 66 | nylon 66 | nylon 66 | nylon 66 | nylon 66 | nylon 66 | nylon 66 |
| | | Linear density | dtex | 470 | 470 | 470 | 470 | 470 | 470 | 470 |
| | | Fiber density (warp/weft directions) | fibers/inch | 50/50 | 50/50 | 50/50 | 50/50 | 50/50 | 50/50 | 50/50 |
| Production conditions | Lamination process (hot press) | Temperature | °C | 170 | 170 | 170 | 170 | 170 | 170 | 170 |
| | | Surface pressure | N/cm² | 5 | 5 | 5 | 18 | 5 | 18 | 18 |
| | | Time | min | 0.5 | 1 | 0.5 | 0.3 | 1 | 1 | 2 |

(continued)

| Evaluation | | | | Unit | Example 5 | Example 6 | Example 7 | Example 8 | Comparative Example 8 | Comparative Example 9 | Comparative Example 10 |
|---|---|---|---|---|---|---|---|---|---|---|---|
| | | Film surface deployment area ratio (Sdr1) | | - | 1.020 | 1.022 | 1.018 | 1.023 | 1.011 | 1.000 | 1.001 |
| | | Base fabric surface deployment area ratio (Sdr2) | | - | 1.031 | 1.030 | 1.030 | 1.028 | 1.030 | 1.028 | 1.028 |
| | Product cross-section structure | Interface deployment area ratio (Sdrl/Sdr2) | | - | 0.989 | 0.992 | 0.988 | 0.995 | 0.981 | 0.973 | 0.974 |
| | | | | - | ◎ | ◎ | ◎ | ◎ | × | × | × |
| | | Air gap between film and base fabric | A-A' cross section | μm | 0.26 | 0.26 | 0.26 | 0.26 | 0.26 | 0.26 | 0.26 |
| | | | B-B' cross section | μm | 8.59 | 0.26 | 0.26 | 0.26 | 0.26 | 0.26 | 0.26 |
| | | | Composite | μm | 4.43 | 0.26 | 0.26 | 0.26 | 0.26 | 0.26 | 0.26 |
| | | | Evaluation | - | O | ◎ | ◎ | ◎ | ◎ | ◎ | ◎ |
| | Laminated base fabric properties | Scrub resistance | | times | 2000 | 1525 | 1300 | 2700 | 1050 | 475 | 525 |
| | | | | - | O | O | O | ◎ | O | × | △ |
| | | Loop stiffness (flexibility, ease of folding) | | mN/cm | 228 | 256 | 280 | 213 | 328 | 350 | 369 |
| | | | | - | ◎ | O | O | ◎ | △ | × | × |

20

[Table 3]

| | | | Unit | Example 9 | Example 10 |
|---|---|---|---|---|---|
| Multilayer composite for an airbag | Multilayer film | Outer layer | - | PA6/66 | PA6/66 |
| | | Intermediate layer | - | m-PE | m-PE |
| | | Adhesive layer | - | PA6/12 | PA6/12 |
| | | Thickness | μm | 20 | 20 |
| | | Layer thickness ratio (Outer layer/ intermediate layer/adhesive layer) | % | 20/70/10 | 20/70/10 |
| | Base fabric | Material properties | - | nylon 66 | polyester |
| | | Linear density | dtex | 230 | 550 |
| | | Fiber density (warp/weft directions) | fibers/ inch | 72/72 | 51/51 |
| Production conditions | Lamination process (thermal roll lamination) | Temperature | °C | 160 | 160 |
| | | Linear pressure | N/cm | 15 | 15 |
| | | Velocity | m/min | 3 | 3 |
| | Subsequent heat treatment | Temperature | °C | 190 | 190 |
| | | Time | min | 3 | 3 |
| Evaluation | Product cross-section structure | Film surface deployment area ratio (Sdr1) | - | 1.013 | 1.014 |
| | | Base fabric surface deployment area ratio (Sdr2) | - | 1.021 | 1.020 |
| | | Interface deployment area ratio (Sdr1Sdr2) | - | 0.992 | 0.994 |
| | | | - | ◎ | ◎ |
| | | Air gap between film and base fabric | A-A' cross section | μm | 0.22 | 0.25 |
| | | | B-B' cross section | μm | 4.8 | 5.86 |
| | | | Composite | μm | 2.51 | 3.06 |
| | | | Evaluation | - | O | O |
| | Laminated base fabric properties | Scrub resistance | times | 1650 | 2300 |
| | | | - | ◎ | ◎ |
| | | Loop stiffness (flexibility, ease of folding) | mN/cm | 225 | 330 |
| | | | - | ◎ | △ |

As is obvious from the results in Tables 1-3, composites with improved scrub resistance were obtained when the ratio of Sdr1/Sdr2 was in the range from 0.986 to 1.1. Further, composites having both scrub resistance and flexibility were obtained when the multilayer film thickness was in the range from 10 μm to 30 μm.

INDUSTRIAL APPLICABILITY

The multilayer composite for an airbag disclosed herein has excellent scrub resistance and flexibility, and thus may be suitably used for airbag applications.

REFERENCE SIGNS LIST

1    Multilayer composite for an airbag
2    Multilayer film
21   Outer layer
22   Other layers
23   Adhesive layer
3    Base fabric
31   Single yarn
4    Air gap
51   Multilayer die
52   Air ring
53   Deflator (free roll)
54   First pinch drive roll
55   Guide roll (free roll)
56   Second pinch drive roll
57   Touch roll (free roll)
58   Take-up drive roll
61   Pressure roll (silicone rubber lined)
62   Metal heating roll (mirror finish)
71   Indenter
72   Loop stiffness chuck
73   Sample stand

**Claims**

1.  A multilayer composite for an airbag, comprising a base fabric and a multilayer film including an outer layer and an adhesive layer adhered to a surface of the base fabric, wherein
    a ratio Sdr1/Sdr2 is from 0.986 to 1.1, where Sdr1 is an interface deployment area ratio of a multilayer film side surface of the multilayer composite for an airbag and Sdr2 is an interface deployment area ratio of a base fabric side surface of the multilayer composite for an airbag.

2.  The multilayer composite for an airbag of claim 1, wherein the multilayer film has a thickness of from 10 $\mu$m to 30 $\mu$m.

3.  The multilayer composite for an airbag of claim 1 or 2, wherein the multilayer composite has an air gap between the multilayer film and the base fabric, the air gap having a length of 6 $\mu$m or less.

4.  A method of producing a multilayer composite for an airbag, the method comprising:

    a thermal lamination step of heat laminating a base fabric and a multilayer film including an outer layer and an adhesive layer with the adhesive layer overlaid on a surface of the base fabric; and
    a subsequent heating step of heating again after the thermal lamination step.

## FIG. 1A

## FIG. 1B

# FIG. 2

# FIG. 3

# FIG. 4

EP 4 289 679 A1

# FIG. 5

# FIG. 6

PLAIN WEAVE

A - - - - - - - - - - - - - - - - - - - - - - - - - - - - - - A'
B - - - - - - - - - - - - - - - - - - - - - - - - - - - - - - B'

TWILL WEAVE

A - - - - - - - - - - - - - - - - - - - - - - - - - - - - - - A'
B - - - - - - - - - - - - - - - - - - - - - - - - - - - - - - B'

## INTERNATIONAL SEARCH REPORT

| International application No. |
|---|
| **PCT/JP2022/004551** |

**A.    CLASSIFICATION OF SUBJECT MATTER**

*B60R 21/235*(2006.01)i; *B32B 27/00*(2006.01)i; *B32B 27/12*(2006.01)i; *B32B 27/34*(2006.01)i; *B60R 21/232*(2011.01)i; *D03D 1/02*(2006.01)i; *D06M 15/59*(2006.01)i
FI:    B60R21/235; B32B27/00 B; B60R21/232; B32B27/12; B32B27/34; D03D1/02; D06M15/59

According to International Patent Classification (IPC) or to both national classification and IPC

**B.    FIELDS SEARCHED**

Minimum documentation searched (classification system followed by classification symbols)
B60R21/235; B32B27/00; B32B27/12; B32B27/34; B60R21/232; D03D1/02; D06M15/59

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| P, A | JP 2021-123296 A (ASAHI KASEI CORP) 30 August 2021 (2021-08-30)<br>paragraphs [0017]-[0090], fig. 1-2 | 1-4 |
| P, A | WO 2021/157733 A1 (ASAHI KASEI CORP) 12 August 2021 (2021-08-12)<br>paragraphs [0025]-[0117], fig. 1-4 | 1-4 |
| P, A | WO 2021/157725 A1 (ASAHI KASEI CORP) 12 August 2021 (2021-08-12)<br>paragraphs [0013]-[0085], fig. 1-5 | 1-4 |
| A | WO 2020/203858 A1 (SEKISUI CHEMICAL CO LTD) 08 October 2020 (2020-10-08)<br>paragraphs [0072]-[0105], fig. 1-2 | 1-4 |
| A | WO 2020/203835 A1 (SEKISUI CHEMICAL CO LTD) 08 October 2020 (2020-10-08)<br>paragraphs [0070]-[0100], fig. 1-2 | 1-4 |
| A | WO 2020/067141 A1 (SEKISUI POLYMATECH CO LTD) 02 April 2020 (2020-04-02)<br>paragraphs [0010]-[0096], fig. 1-3 | 1-4 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/004551** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2011/0203732 A1 (KESHAVARAJ, Ramesh) 25 August 2011 (2011-08-25)<br>paragraphs [0024]-[0039], fig. 1-8 | 1-4 |
| A | US 2003/0060104 A1 (VEIGA, Manuel J.) 27 March 2003 (2003-03-27)<br>paragraphs [0044]-[0073], fig. 1-16 | 1-4 |

Form PCT/ISA/210 (second sheet) (January 2015)

International application No.

**PCT/JP2022/004551**

| Patent document cited in search report | | | Publication date (day/month/year) | Patent family member(s) | | | Publication date (day/month/year) |
|---|---|---|---|---|---|---|---|
| JP | 2021-123296 | A | 30 August 2021 | (Family: none) | | | |
| WO | 2021/157733 | A1 | 12 August 2021 | (Family: none) | | | |
| WO | 2021/157725 | A1 | 12 August 2021 | (Family: none) | | | |
| WO | 2020/203858 | A1 | 08 October 2020 | TW | 202102549 | A | |
| | | | | CN | 113646339 | A | |
| | | | | KR | 20210148098 | A | |
| | | | | EP | 3950732 | A1 | |
| | | | | paragraphs [0123]-[0176], fig. 1-2 | | | |
| WO | 2020/203835 | A1 | 08 October 2020 | TW | 202043363 | A | |
| | | | | CN | 113728017 | A | |
| | | | | KR | 20210148099 | A | |
| | | | | EP | 3950731 | A1 | |
| | | | | paragraphs [0121]-[0170], fig. 1-2 | | | |
| WO | 2020/067141 | A1 | 02 April 2020 | TW | 202036816 | A | |
| | | | | CN | 112715059 | A | |
| | | | | KR | 20210063339 | A | |
| | | | | EP | 3860321 | A1 | |
| | | | | US | 2021/0388175 | A1 | |
| | | | | paragraphs [0015]-[0158], fig. 1-3 | | | |
| US | 2011/0203732 | A1 | 25 August 2011 | EP | 1902910 | A1 | |
| | | | | CN | 101186138 | A | |
| US | 2003/0060104 | A1 | 27 March 2003 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4965757 B
- EP 1518761 A
- WO 2020032032 A